# EUROPEAN PATENT SPECIFICATION

(11) **EP 1 066 129 B1**
(45) Date of publication and mention of the grant of the patent: **26.06.2002**
(21) Application number: 99907789.4
(22) Date of filing: 23.03.1999
(51) Int. Cl.: B23D 33/02, B23D 23/00

(54) **METHOD FOR SHEARING TO SIZE ROLLED BARS AND RELATIVE SHEARS FOR SHEARING TO SIZE**
VERFAHREN UND VORRICHTUNG ZUM ZERTEILEN VON WALZGUT
PROCEDE DE CISAILLEMENT DE BARRES LAMINEES A UNE DIMENSION VOULUE ET CISAILLES ADAPTEES A LA MISE EN OEUVRE DE CE PROCEDE

(30) Priority: 25.03.1998 IT UD980048
(43) Date of publication of application: 10.01.2001
(73) Proprietor: Danieli & C. Officine Meccaniche SpA, 33042 Buttrio (Udine) (IT)
(72) Inventor: POLONI, Alfredo, I-34070 Fogliano di Redipuglia (IT); BORDIGNON, Giuseppe, I-33050 Bicinicco (IT); DE LUCA, Andrea, I-33047 Remanzacco (IT); LAVARONI, Giorgio, I-33042 Buttrio (IT); ZAMO', Giampietro, I-33100 Udine (IT)
(74) Representative: Petraz, Gilberto Luigi
(86) International application number: IB9900490
(87) International publication number: WO9948638

(56) References cited:
- EP-A- 0 685 274
- WO-A-97/27014
- DE-A- 4 119 842
- DE-A- 4 119 843
- FR-A- 1 129 372
- FR-A- 1 430 009

## Description

### FIELD OF APPLICATION

This invention concerns a method for shearing to size rolled bars and relative shears for shearing to size as set forth in the respective main claims,

The invention is applied in the field of steel production to shear to size rolled bars, round pieces or other sections obtained in bars and emerging from the rolling train at a speed of 100 metres per second and more.

### BACKGROUND OF THE INVENTION

In the state of the art there have been various proposals for flying shears used in the metallurgical field for shearing to size bars emerging from the rolling train.

Before the continuous shearing to size step, these flying shears provide to eliminate the leading end of the rolled stock and, at the end of the continuous shearing to size step, they provide to eliminate the trailing end of the rolled stock too, inasmuch as normally these two ends have unacceptable geometric deformations and/or include pollutant particles.

Also, in the state of the art, the first or last bar is sheared to segments in order to obtain samples for testing and inspection.

Among those shears which are known to the state of the art, flying shears using counter-rotating blades mounted on blade-bearing drums have proved to be the most suitable also for shearing bars travelling at high speed.

These shears comprise at least a counter-opposed pair of counter-rotating drums, each of which has an equal number of blades, at an equal angular distance from each other, mounted on its circumference.

An example of this type of flying shears is set forth in EP-A-0618033.

Upstream and downstream of the blade-bearing drums there are switching devices suitable to convey the rolled bar lengthwise; the switching devices can be displaced normally on a horizontal plane in order to make the rolled stock itself pass between the counter-rotating blades at the moment of shearing.

The speed at which the switching devices are laterally displaced is correlated to the circumferential position and the speed at which the drums rotate, in such a way that the instant at which the bar transits between the blades coincides with a desired shearing position of the blades themselves.

At present, in so-called start-stop shears, the drums are taken from a stationary position to the working peripheral speed several seconds before shearing and, after shearing is completed, they are stopped.

This subjects the motor means of the drums to high stresses, with acceleration and deceleration ramps with a slope proportional to the time in which they have to reach working speed.

The working speed, advantageously, is equal to the rolling speed so as to prevent the bar in transit being drawn or jamming.

The motor means are therefore subject to extremely variable and discontinuous dynamics, which considerably increases their absorption and therefore the overall consumption of the shears.

Moreover, the motor means must necessarily have very high power, in order to reach the high working speeds required as quickly as possible.

Moreover, shears known to the state of the art do not allow to make accurate cuts in terms of length of the rolled bar inasmuch as, since the blade-bearing drums are taken to the desired speed some seconds before shearing takes place, it is difficult to relate the speed of rotation of the drums and the position of their blades to the speed of the rolled bar.

Businessmen working in this field complain about this problem especially for very high rolling speeds, for example of around 100 metres per second and more.

In fact, it is often the case that at the moment the rolled stock is sheared to size, or when a desired length of the rolled bar has passed after the leading end has been sheared, the blades are no longer in the correct shearing position; this leads to shearing errors, even of several metres, especially at high speeds.

Moreover, shears as are known to the state of the art have a problem of the correct positioning, discharge, scrapping and recovery of the sheared-off end segments.

DE-A-4119843, on which the preamble of claims 1 and 12 is based, describes a shears for cropping the leading and trailing end of a rolled product, comprising a pair of counter-opposed blade-bearing heads, each of which has pairs of cooperating blades defining at least three adjacent shearing planes.

The shears also comprises a switching device which can traverse on a horizontal plane, the function of which is to take the rolled stock which is to be sheared into cooperation with the shearing planes defined by the blades.

Between two adjacent shearing planes there is a space without blades, which defines substantially the space through which the usable part of the bar passes.

In the case of a simple cropping of the leading and trailing ends, the switching device makes a single-direction movement between the various shearing planes, at a speed correlated to the width of the blade-less space between the blade-bearing heads.

In the case of shearing to size, the switching device moves alternately between the various shearing planes where the blades are, at a speed correlated to the length of the segment to be sheared to size.

FR-A-1.430.009 also refers to a shears for rolled products comprising blade-bearing drums rotating continuously at a uniform angular speed and cooperating with a device to feed the rolled stock synchronised with the speed of rotation of the drums, so that the rolled stock passes between the blades at a precise shearing moment.

The solutions proposed by these documents are not satisfactory because the speed of rotation of the blade-bearing drums is correlated only to the speed of feed of the rolled stock, but not to the length of the segments to be sheared, and therefore for every shearing to size operation it is necessary to re-phase the synchronisms to define the correct shearing moment.

Moreover, the solutions known in the state of the art do not take into account the fact that, in correspondence with the shearing of the trailing end, the last segment of the rolled stock to be sheared to size is often not of a size which is compatible with the requirements of production, and therefore has to be discarded, causing a great loss of material.

The present Applicant has designed and embodied this invention to overcome the shortcomings of shears known to the state of the art, to reduce energy consumption and stress on the motors, to improve the accuracy of the shearing operation and to obtain further advantages as will be shown hereinafter.

### SUMMARY OF THE INVENTION

This invention is set forth and characterised in the respective main claims, while the dependent claims describe other characteristics of the main embodiment.

The purpose of the invention is to provide a method for shearing to size rolled bars at a speed of 100 metres per second and more, and also the relative flying shears to shear to size which will achieve this method, the method and the shears making it possible to reduce energy consumption, to reduce the amount of material discarded and to have extremely accurate shearing operations.

The invention also proposes to simplify the shears for shearing at speed, to use a smaller amount of equipment for shearing to size and for scrapping, to simplify the governing, control and command programming, to help the rolled stock to position itself in the desired discharge channel, to reduce deformation of the hot rolled stock which is to be sheared inasmuch as the diameter of the blade-bearing drum can be reduced and therefore the unsupported section of the rolled stock is reduced, and to obtain further advantages as will become clear in the following description.

The method according to the invention provides to maintain the blade-bearing drums in continuous rotation during the cycle wherein the bars are sheared from the rolled stock arriving from the rolling mill.

This makes it possible to reduce stresses on the motor means of the blade-bearing drums, and therefore to reduce the power installed, the wear on the mechanical organs and the start-stop drive mechanisms; it is likewise possible to reduce the possibility of break-downs and malfunctions, and to obtain an extremely high precision in shearing the desired length of bar.

In order to obtain the desired length of the bar- which varies from case to case - the invention provides to make the speed of rotation of the blade-bearing drums proportionate to the speed of feed of the rolled stock and to the length of the bar sheared.

It is therefore in the spirit of the invention to calculate, on each occasion, the correct speed of rotation of the blade-bearing drums according to the speed of feed of the specific rolled stock which is to be sheared and the base measurement constituting the bar, in such a manner as to obtain, with a finite number of rotation passes of the blade-bearing drums, a plurality of consecutive cuts of the desired length.

'Base measurement' should be taken to mean the finished length which is then found as a multiple in all the sheared bars, in any particular shearing cycle.

Thus, for a base measurement of, for example, six metres, the length of the sheared bars will be a multiple of this base measurement and the number of rotation passes of the blade-bearing drums for each length of bar will always be a finite number.

Therefore, it is within the spirit of the invention that with each new rolled stock to be sheared, given the same base measurement, the speed of rotation of the blade-bearing drums is rephased in order to relate it correctly to the real speed of feed of the rolled stock; in the same way a re-adjustment of the speed of rotation of the blade-bearing drums corresponds to a variation in the base measurement, given the same speed of advance of the rolled stock.

According to the invention, in order to shear the trailing end, the remaining length of the bar to be sheared is measured with a remote sensor, we calculate how many base measurements are contained in the said remaining length and we proportion the length of the terminal segment of bar which precedes the trailing end to the measurement of the remaining length, so as to have, in any case, bars sheared to size which are multiples of the base measurement.

In this way we prevent the formation, before the trailing end, of segments which are too short or in any case have to be discarded because they cannot be used.

The invention provides a shears with two drums, facing each other and in continuous counter-rotation, equipped with specific blades for shearing to size and, at the two sides of the blades for shearing to size, specific blades for scrapping the leading and trailing ends of the rolled stock.

In one embodiment of the invention, there are also specific blades employed for shearing the leading and trailing ends of the rolled stock.

Shearing the leading end and shearing the trailing end should be taken to mean the first and last usable cut of the good part of the rolled stock to be sheared to size.

According to a variant, the blades for shearing the leading and trailing ends are adjacent to the scrapping blades.

According to another variant, the leading end and the trailing end are sheared by the same blades which shear to size.

According to a further variant, the specific blades for shearing the leading and trailing end of the rolled stock are also used for shearing sample segments, in correspondence with the leading and/or trailing ends of the rolled stock, which are then used for testing and inspection.

According to the invention, the blades for shearing to size are misaligned with respect to the rolling axis; to be more exact, according to a variant, the blades for shearing to size, in pairs on the respective drums, are arranged aligned with the corresponding blades of the other drum, respectively on one side and the other side of the rolling axis. According to a variant of the invention, the blades for shearing to size, and/or the blades for shearing the leading and trailing end, are conformed and geometrically arranged so as to direct the sheared end of the rolled stock upwards or downwards.

This makes it possible, for example, to direct correctly the bars sheared to size towards two or more discharge channels or similar, associated with the desired collection means.

According to the invention, at the sides of the blades for shearing to size, and separating them from the scrapping blades, there are two spaces without blades which serve for the rolled stock to pass through, both on the left and on the right of the blades for shearing to size during the step wherein the good segment of the rolled stock is passing through.

The rolled bar is taken by a single-channel switching device which can be traversed alternately from one blade-less space to the other so that at every passage in correspondence with the blades for shearing to size a bar of the desired length is obtained, which is in any case a multiple of the base measurement.

When the good segment of the rolled stock has been sheared to size, the remaining trailing end is taken by the single-channel switching device in correspondence with the scrapping shears.

According to a variant, the scrapping shears are also conformed and geometrically arranged so as to direct the segments which are to be scrapped upwards or downwards in order to convey them correctly towards discharge channels or similar associated with the desired collection means such as, for example, cylindrical collection drums known as cyclones.

According to a variant, the blade-bearing drums include, at least in correspondence with the blades, a cam development, possibly with recesses or similar, which help to direct the sheared bars or the scrap segments correctly into the respective discharge channels.

According to another variant, upstream of the blade-bearing drums there is at least a tile with a conformation which helps to direct the rolled stock in the most suitable direction as required on each occasion by the shearing cycle.

It is within the spirit of the invention also to use two or more parallel shears in such a manner as to allow the simultaneous shearing of one or more rolled products arriving from the same multi-section rolling line, or even from two different rolling lines.

Thus it is possible to reduce costs and the overall bulk of the plants, as it is possible to use the same motor means for all the parallel shears.

According to a variant, at least some of the parallel shears can be excluded from the shearing line when not in use or for maintenance operations.

### BRIEF DESCRIPTION OF THE DRAWINGS

The attached Figures are given as a non-restrictive example, and show some preferential embodiments of the invention as follows:
- Fig. 1: shows a diagram with a view from above of a shears according to the invention;
- Fig. 2: shows a part and enlarged view from "A" to "A" of Fig. 1;
- Fig. 3a: shows a part and enlarged view from "B" to "B" of Fig. 1;
- Fig. 3b: shows a diagram of a shearing cycle of the shears in Fig. 1;
- Fig. 4: shows a three-dimensional view of the enlarged detail "C" of Fig. 1;
- Figs. 5a-5f: show transverse cross sections of the blade-bearing drums of Fig. 2 in four different operating situations;
- Fig. 6: shows a variant of Fig. 5a;
- Fig. 7: shows a variant of Fig. 3b;
- Figs. 8a-8b: show a part view, seen from above, of the shears as shown in the embodiment in Figs. 6 and 7 in two different operating steps;
- Fig. 9a: shows a variant of Fig. 2;
- Fig. 9b: shows a view from above of a variant of Fig. 9a;
- Fig. 10a: shows a variant of Fig. 9b;
- Fig. 10b: shows a variant of Fig. 10a.

### DETAILED DESCRIPTION OF PREFERRED EMBODIMENT

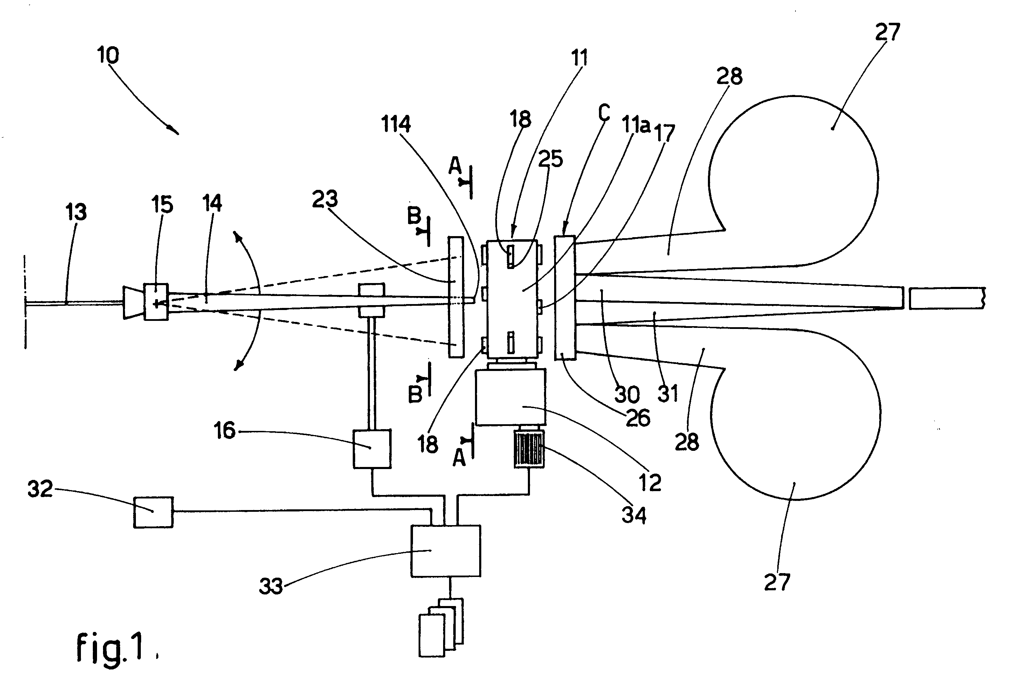

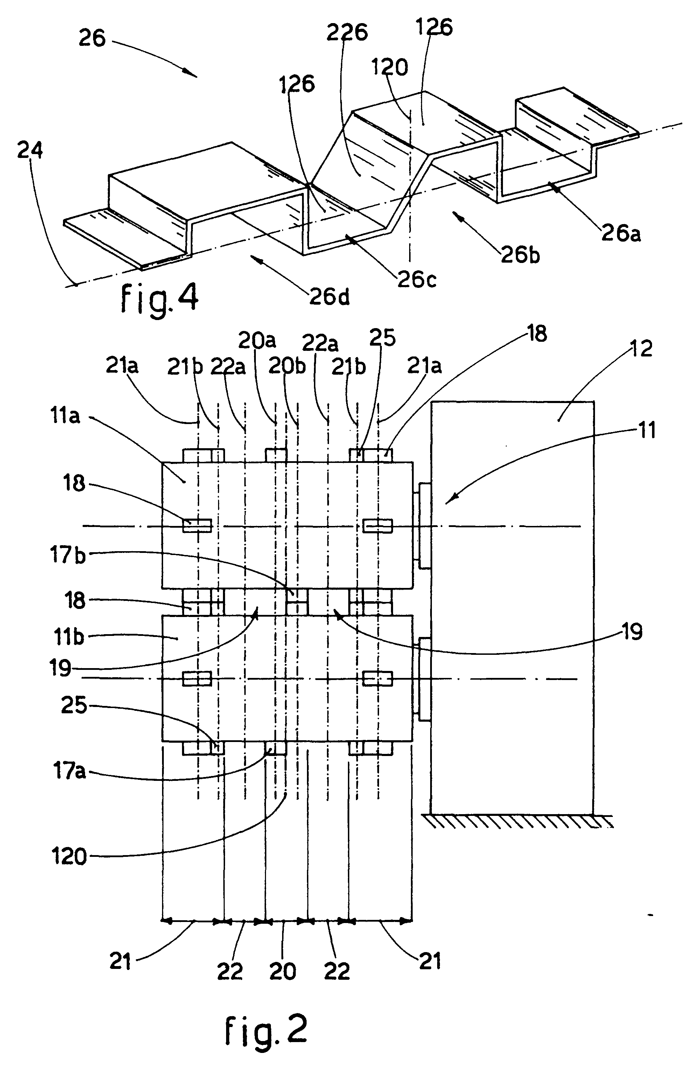

According to the invention, the shears 10 as shown in Figs. 1 and 2 includes two blade-bearing drums 11, respectively the upper drum 11a and the lower drum 11b, super-imposed and made to counter-rotate by a transmission unit 12 associated with a motor 34; the blade-bearing drums 11 are in continuous rotation at a substantially constant angular velocity.

The shears 10 serves to shear to size a rolled product emerging from a hot rolling mill (not shown here), the rolled product consisting of a bar, wirerod or similar.

According to the invention, at least first blades 17 for shearing to size are mounted centrally on the blade-bearing drum 11, and at the sides second blades 18 for scrapping.

The blades 17 and 18 are arranged at an equal distance on the circumference of the respective blade-bearing drum 11 and, in this case, there are two blades 17 for shearing to size, arranged at 180° with respect to each other, and four scrapping blades 18, arranged at 90° with respect to each other, for each of the two drums 11.

Moreover, in the embodiment shown in Figs. 1 and 2, adjacent to the scrapping blades 18, there are third blades 25, in this case two for each drum 11, used to shear the leading and trailing end of the rolled stock.

Moreover, as will be described in more detail hereinafter, the third blades 25 are used to shear segments for sampling used for tests and inspections.

According to the invention, the sample segments are longer than the scrap pieces.

This makes it possible to identify the sample segments easily, even if, as happens in the preferential embodiment described here, they are conveyed to the same collection means used for the segments to be scrapped.

The blades for shearing to size 17 are divided into shearing blades 17a and shearing blades 17b, these blades 17a and 17b being arranged in a mating position on the respective drums 11 and having a different conformation studied to direct respectively upwards and downwards the leading end of the bar to be sheared to size.

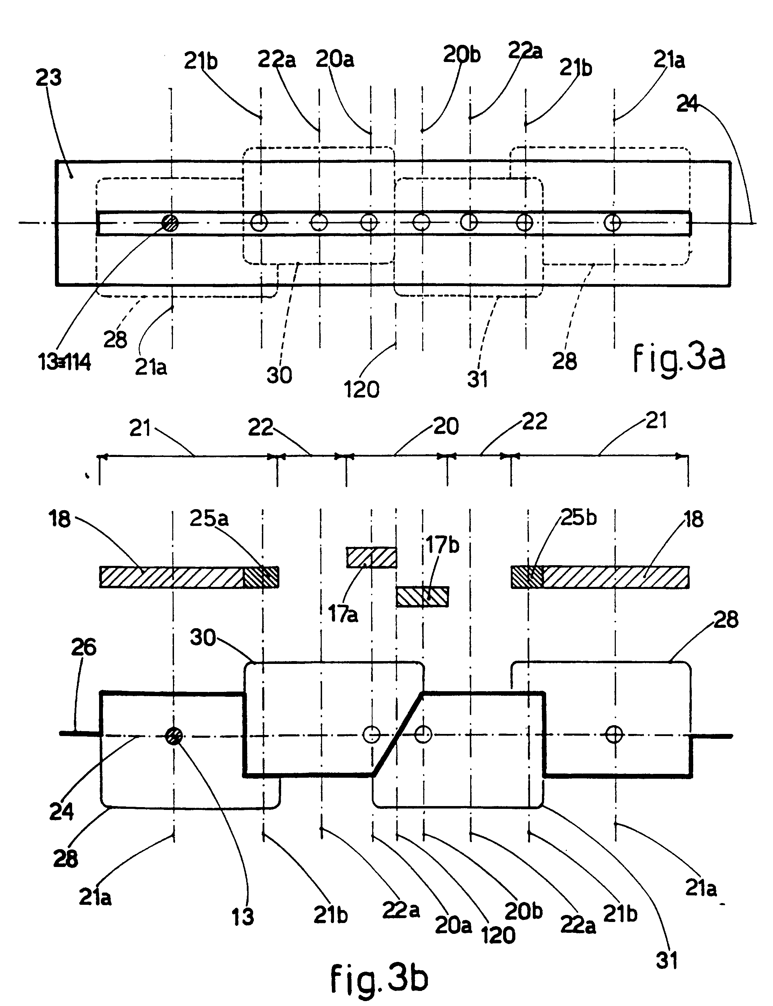

The shearing blades 17a define a shearing axis 20a while the shearing blades 17b define a shearing axis 20b, the axes 20a and 20b being arranged symmetrically on one side and the other of the central rolling axis 120 (Figs. 2, 3a-3b).

Between the cylindrical ring which defines the ends of the blades 17 and the cylindrical rings which define the ends of the blades 18 and 25 arranged at the two sides, there is a space 19 without blades where the rolled stock 13 passes through without coming into contact with the blades 17, 18 and 25 for the whole good section of the rolled stock which is to be sheared to size.

To be more exact, as shown in Figs. 2 and 3b, the blades are arranged on the drums 11a and 11b to define a central zone 20 for shearing to size, astride the rolling axis 120, two lateral zones 22 through which the rolled stock 13 passes, and two zones 21 for shearing the leading and trailing ends and for shearing for scrap.

The median axes 22a of the two lateral transit zones 22 substantially indicate the nominal position of the rolled stock 13 during the passage of the good part of the bar, the axes 20a, 20b substantially indicate the positions for shearing to size, the axes 21b substantially indicate the positions for shearing the leading and trailing ends and for shearing for samples, and the axes 21a indicate the median axes of the zones for scrapping the leading and trailing ends.

The rolled stock 13 arrives at rolling speed from the last stand of the rolling train on an axis 120 and is guided inside a single-channel switching device 14 located upstream of the blade-bearing drums 11.

The single-channel switching device 14 traverses laterally around an articulated joint 15 in a movement which is imparted by drive means 16.

The traversing movement, according to the steps of the shearing cycle, takes the end 114 of the single-channel switching device 14, and therefore the rolled stock 13, in correspondence with one of the afore-said zones 20, 21 or 22, and precisely around the respective axis 20a, 20b, 21a, 21b and 22a.

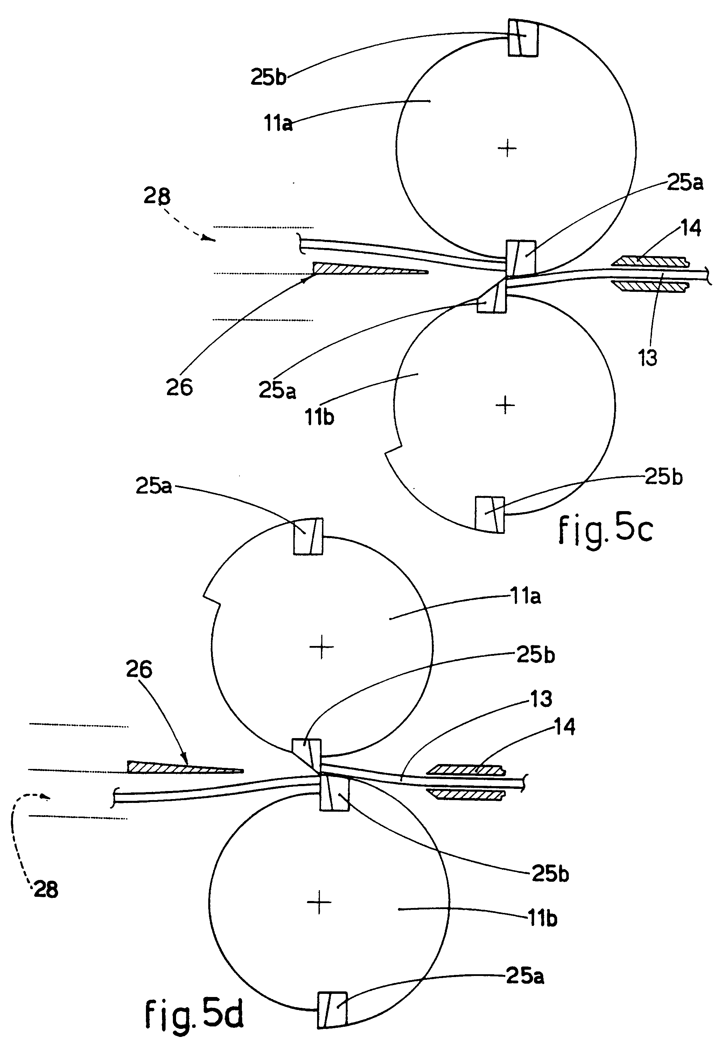

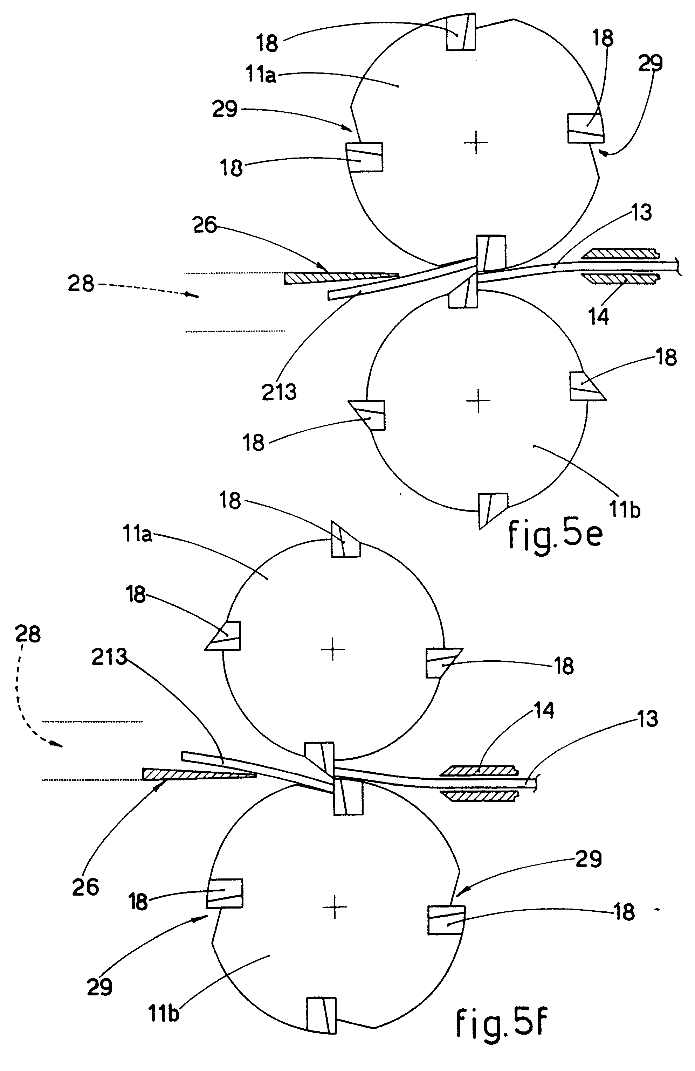

The shearing cycle, shown schematically in Fig. 3b, provides that the rolled stock 13 as it emerges from the rolling line is first of all taken by the single-channel switching device 14 in correspondence with one of the two zones 21, for example, the one on the left, between the scrapping blades 18 (Figs. 5e, 5f) to scrap a certain length of the leading end, then in correspondence with the sampling blades 25 to shear a sample segment of the leading end (Fig. 5d) and then in correspondence with the adjacent transit zone 22.

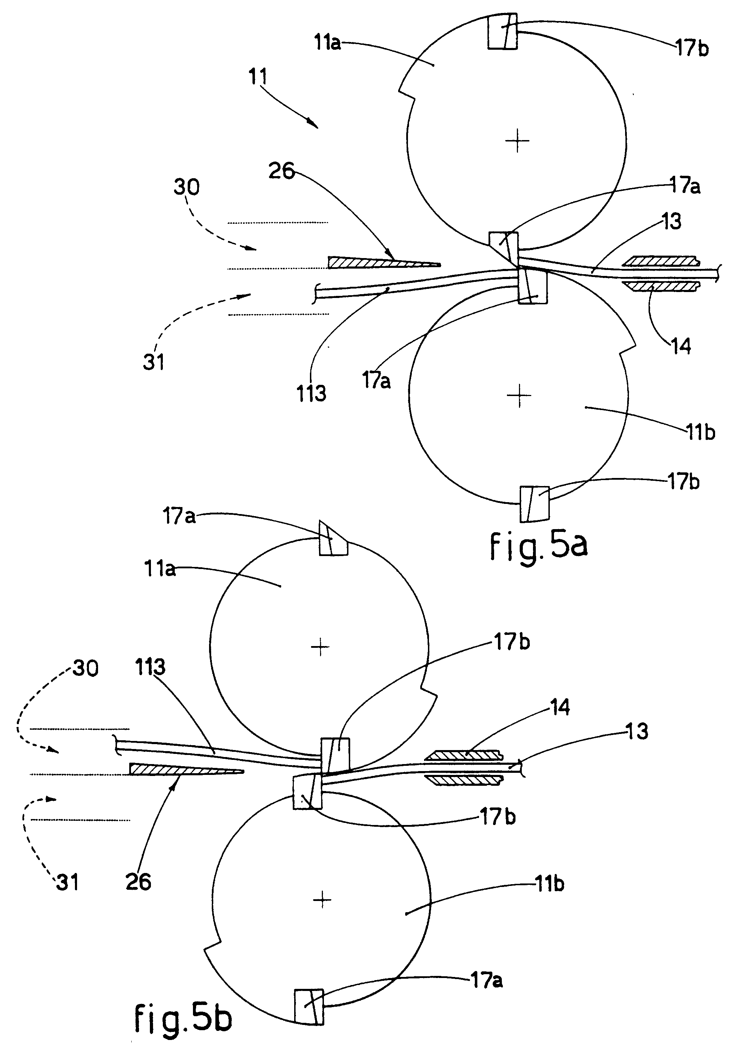

When the rolled stock 13 has travelled the desired length, it is taken in correspondence with the central zone 20 for the first shearing to size (Fig. 5a) and then to the opposite transit zone 22.

The rolled stock 13 is then taken alternately from one transit zone 22 to the other so that at every passage through the central zone 20 (Figs. 5a and 5b) it is sheared into bars 113 of the required length.

According to the invention, the rolled stock 13 moves from one zone to the other in a continuous movement.

Before the rolled stock 13 reaches the shears 10, control and monitoring means 32 located upstream and/or associated with the last rolling stand communicate to the control and command unit 33 the speed of feed of the rolled stock 13.

The control and command unit 33 determines the speed of rotation of the drums 11 according to the base length which is then found as a multiple in the bars 113 which have been sheared to size, and according to the circumferential distance of the shearing blades 17.

This means that when the rolled stock 13 reaches the shears 10 the speed of rotation of the drums 11 is coherent with the speed of feed of the rolled stock 13 according to the base length which will constitute, as a multiple, the length of the bars 113.

Due to this determination of the speed of rotation of the drums 11, and according to the speed of feed of the rolled stock 13 and the length of the bar to be sheared, the number of passes of the blades 17 for each shearing cycle is always a finite number.

Subsequently, the remaining part, that is to say, the trailing end, of the rolled stock 13 is taken into correspondence with the zone 21 coherent with the specific direction of lateral displacement of the rolled stock 13 so that the blades 25 can shear a segment of the trailing end for sampling (Fig. 5c) and the scrapping blades 18 can scrap the remaining part.

In other words, the zone 21 for scrapping the trailing end of the rolled stock 13 is a function of the position assumed by the single-channel switching device 14, right or left of the shearing blades 17, after the last shearing to size.

The inclusion of two zones 21 prevents return movements and inversions of direction and therefore unnecessary passes of the rolled stock 13 through the central zone 20 in order to scrap the trailing ends.

In the embodiment shown here, the end 114 of the single-channel switching device 14, during the traversing moment, travels inside a linear guide 23, shown in detail in Fig. 3a, defining a horizontal shearing plane 24.

According to a variant, used with blades having different heights or particular conformations, the guide 23 is shaped so as to define a shearing plane with a desired development, for example, a zigzag development, which will make it possible to place the rolled stock 13 in the most suitable vertical position for the intervention of the blades 17, 18 or 25, and to correctly direct the sheared bars 113, the sample segments and the scrap segments 213.

With the help of Figs. 5a-5f, we shall now see how the specific conformation of the blades 17, 18 and 25 makes it possible to convey correctly the sheared to size bars 113, the scrap segments 213 and the sample segments towards the respective reception channels 30, 31 and 28 associated with the desired collection means.

To be more exact, the sheared to size bars 113 are sent through the reception channels 30 and 31 towards a loop-forming head, a winding device, or other collection devices, and the sample segments and scrap segments 213 are sent through reception channels 28 to collection cyclones 27.

According to the invention, by using two or more reception channels for the sheared to size bars 113 it is possible to facilitate and accelerate the collection operations, but without the latter affecting the rolling speed.

As shown in Fig. 5a, the blades 17a are conformed in such a manner that, after shearing has been carried out, the point of the rolled stock 13 is lifted and directed naturally upwards inside the reception channel 30.

On the contrary, the blades 17b, as shown in Fig. 5b, are conformed in such a way that, after shearing has been carried out, the point of the rolled stock 13 is lowered and directed naturally downwards inside the reception channel 31.

In this way, the sheared to size bars 113 are alternately conveyed into the reception channel 30 or the reception channel 31 according to whether the single-channel switching device 14 arrives in the central zone 20 from the left or from the right.

The scrapping blades 18 are arranged on the blade-bearing drums 11 in such a manner as to direct downwards (Fig. 5e) or upwards (Fig. 5f) the sheared end of the scrap segments 213.

To be more exact, in correspondence with the right zone 21, the scrapping blades 18 are conformed as shown in Fig. 5f inasmuch as the reception channel 28 develops substantially above the shearing plane 24 and therefore it is necessary to direct the scrap segment 213 upwards; in correspondence with the left zone 21, the scrapping blades 18 are conformed as shown in Fig. 5e inasmuch as the reception channel 28 develops substantially below the shearing plane 24 and therefore it is necessary to direct the scrap segment 213 downwards.

The blades for shearing the leading and trailing ends and for sampling 25 are divided into blades 25a for shearing the trailing ends (Fig. 5c) conformed to direct the sheared end of the rolled stock 13 downwards, and blades 25b for shearing the leading ends (Fig. 5d) conformed to direct the sheared end of the rolled stock 13 upwards.

It is thus possible to direct correctly the rolled stock 13 upwards after the leading end has been sheared so as to allow the subsequent shearing to size of bars 113, or downwards after the trailing end has been sheared so as to allow the subsequent shearing of scrap segments 213.

The correct directioning of the sheared to size bars 113 and the segments 213 is facilitated, not only by the particular reciprocal arrangement of the blades 17a, 17b, 18, 25a and 25b on the upper 11a and lower 11b blade-bearing drums, but also by the particular conformation of the blade-bearing drums 11 and the stationary tile 26 located downstream of the drums 11.

The tile 26, as can be seen in Figs. 3b and 4, is suitably shaped so as to guide the sheared end upwards or downwards according to whether the shearing operation is performed by the blades 17a, 17b, 25a, 25b or 18.

To be more exact, as shown in Fig. 4, the tile 26 defines four substantially U-shaped transit seatings, respectively the first 26a, the second 26b, the third 26c and the fourth 26d, the second 26b and the fourth 26d being faced downwards.

The first 26a and the fourth 26d transit seatings are substantially aligned with the respective reception channels 28, and the second 26b and the third 26c transit seatings are substantially aligned respectively with the reception channels 31 and 30.

To be more exact, the central sides 126 of the U-shapes defined by the second 26b and the third 26c transit seatings of the tile 26 are included respectively above and below the shearing plane 24.

In this case, moreover, the side in common 226 of the U-shapes defined by the second 26b and the third 26c transit seatings is inclined and its center falls substantially in correspondence with the rolling axis 120.

The blade-bearing drums 11a and 11b, in correspondence with the shearing blades 17, have cam conformations which are substantially mating with each other; they allow the sheared end to lift (Fig. 5a) or descend (Fig. 5b).

In correspondence with the blades for shearing the leading end 25b and the trailing end 25a, the cam conformation is similar to the one in correspondence with the blades for shearing to size 17a and 17b, except that, in this case, it is adapted to the need to direct correctly the sample segments into the reception channels 28.

In fact, as shown in Fig. 5c, on the upper drum 11a, in correspondence with the blades 25, there is a semi-circumference which, after the blades 25a have performed their shearing operation, makes it possible to direct downwards the rolled stock 13 until the blades 25b intervene.

The section of rolled stock included between the shearing operation carried out by the blades 25a and the blades 25b corresponds to a sample segment which is longer than the scrap segments 213 and can therefore be easily identified.

In this way, the sample segment thus sheared passes under the central side 126 of the third transit seating 26c and is then conveyed into the reception channel 28 instead of into the reception channel 30.

When the afore-said semi-circumference is finished, the rolled stock 13 is taken above the central side of the U-shape defined by the third transit seating 26c of the tile 26 so that the sheared to size bars 113 are conveyed alternately into the reception channels 30 and 31.

The same considerations apply for Fig. 5d, except that, in this case, the semi-circumference in correspondence with the blades 25 is made on the lower drum 11b inasmuch as the sample segment must pass above the central side 126 of the second transit seating 26b so as to be conveyed into the reception channel 28 rather than the reception channel 31.

In correspondence with the scrapping blades 18, on the contrary, the upper blade-bearing drum 11a has recesses 29 for each blade 18, which, as can be seen in Figs. 5e and 5f, facilitate the discharge downwards or upwards of the scrap segments 213 and their correct positioning in the reception channels 28.

It lies within the spirit of the invention to include blade-bearing drums 11 with any number of blades 17, 18 and 25 and in any geometrical arrangement whatsoever.

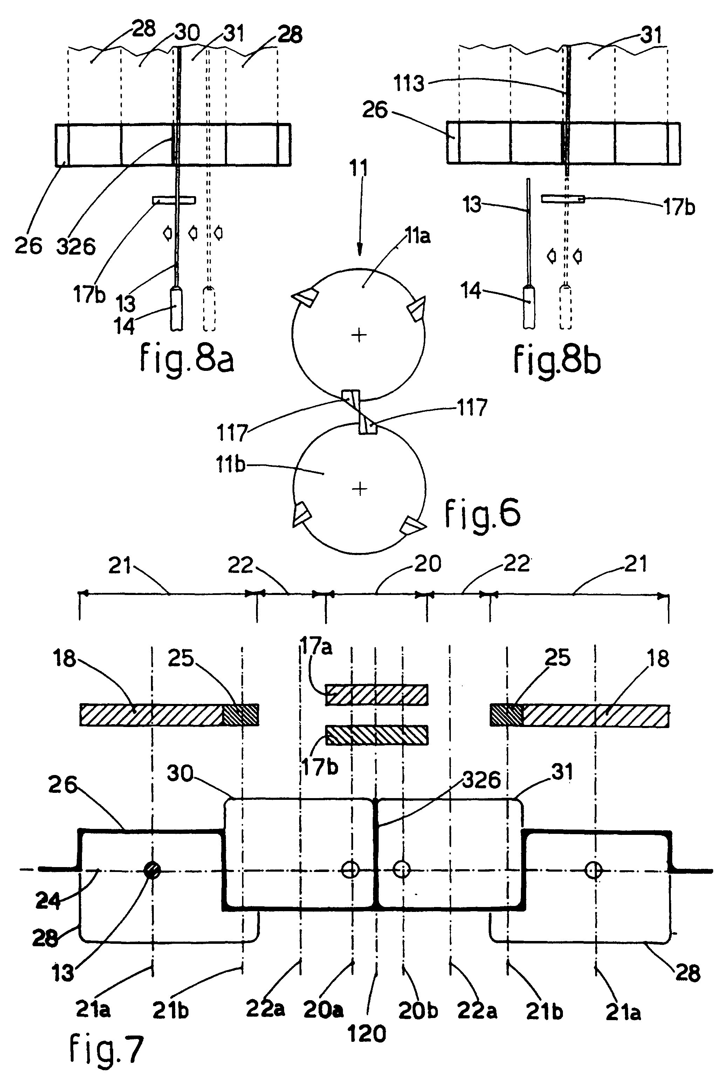

In the variant shown in Fig. 6, used particularly if not exclusively for shearing rolled stock at high temperature and/or subjected to heat treatment, there are three blades 117 for shearing to size arranged at 120° from each other on the circumference of the respective blade-bearing drum 11.

As shown in Fig. 7, the center line of the blades 117 is substantially aligned with the rolling axis 120; the shearing to size of the rolled stock 13 into bars 113 takes place, just as in the embodiments explained above, in correspondence with the central zone 20 with every passage of the rolled stock 13 from one transit zone 22 to the other due to the effect of the traversing movements of the single-channel switching device 14 (Figs. 8a-8b).

In this case too there are two reception channels 28 to convey the scrap segments 213 or the sample segments to the collection cyclones 27 and two reception channels, respectively 30 and 31, to convey the sheared to size bars 113 to the desired collection devices.

In this embodiment, upstream of the blade-bearing drums 11, there is a stationary tile 26 with a conformation studied to adapt to the channels 28, 30 and 31 which are arranged differently from the previous embodiments.

To be more exact, the tile 26 has a vertical baffle 326 at the center, aligned with the rolling axis 120, to separate the reception channels 30 and 31.

For the same reason, the scrapping blades 18 and the blades 25 for shearing the leading and trailing end and for shearing samples are also conformed to adapt to the arrangement of the reception channels 28, 30 and 31.

To be more exact, the scrapping blades 18, both on the left and on the right, are conformed as shown in Fig. 5e, inasmuch as both the reception channels 28 have a section which substantially develops below the shearing plane 24 and therefore it is necessary to direct the scrap segments 213 downwards.

In the variant shown in Figs. 6 and 7, there may be two or more shearing blades 117 which are mounted at an equal distance on the same shearing axis, which increases the accuracy of the shearing.

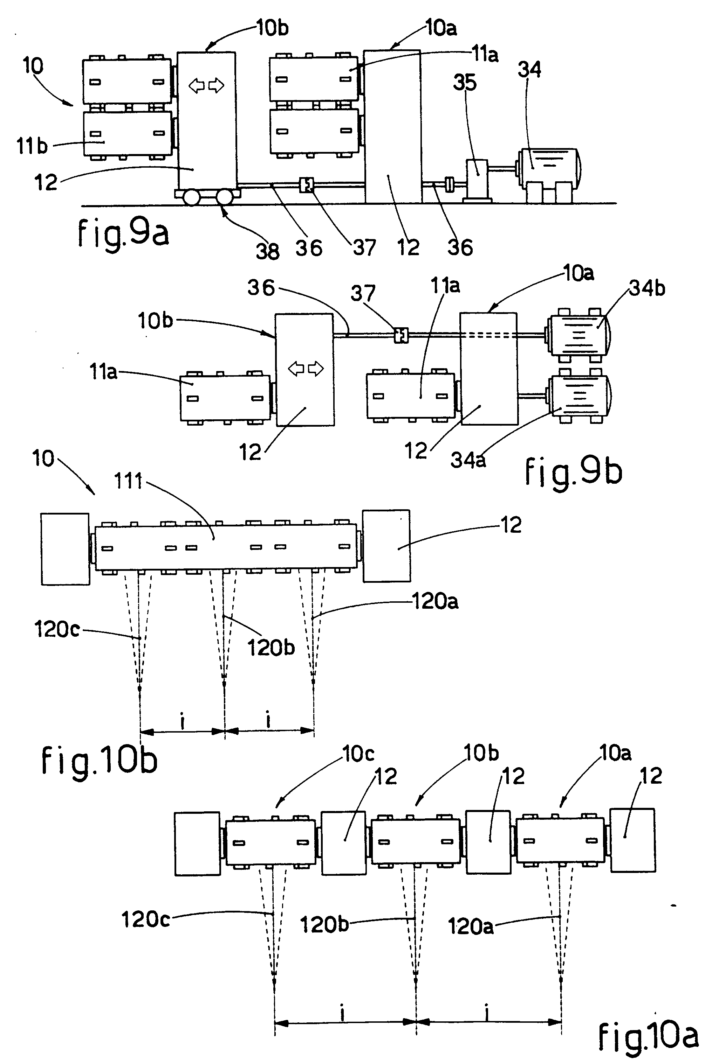

In the variant shown in Fig. 9a there is a shearing line consisting of two parallel shears 10, respectively 10a and 10b.

With this embodiment it is possible to simultaneously shear two rolled products 13 arriving from the same multi-section rolling line or from two separate rolling lines.

In this case the shears 10a and 10b are driven by a single motor 34 associated at outlet with a speed reducer 35; motion is transmitted from the speed reducer 35 to the transmission units 12 of the two shears 10 by means of shafts 36.

The transmission shaft 36 of the shears 10b has a disengageable joint 37 which allows the shears 10b, equipped for this purpose with moving means 38, to be excluded from the shearing line when it is not being used or for maintenance purposes.

In the variant shown in Fig. 9b, the two shears 10a and 10b are driven by respective motors 34a and 34b; in this embodiment too the transmission shaft 36 of the shears 10b has a disengageable joint 37 which allows the shears 10b to be excluded from the shearing line.

In the variant shown in Fig. 10a, there are three shears 10, respectively 10a, 10b, and 10c, which allow to shear simultaneously three rolled products 13 arriving from the same multi-section rolling line or from three different rolling lines.

Each shears 10a, 10b, 10c is driven by a respective transmission unit 12 which, just as in the embodiments shown in Figs. 9a-9b, can be associated with its own motor or with a motor common to all three shears 10a-10c.

The variant shown in Fig. 10a can be used in the event that the three rolling lines, whose axes are shown respectively by 120a, 120b and 120c, have a large interaxis "i".

The variant shown in Fig. 10b can be used when the three rolling lines, whose axes are shown respectively by 120a, 120b and 120c, have a small interaxis "i", as in the case, for example, of multi-section rolling lines.

In this embodiment, the shears 10 has two super-imposed drums 111, greater in length and equipped with three groups of blades, each of which cooperates with a respective rolling axis 120a, 120b and 120c.

## Claims

1. Method for shearing to size rolled bars, the method using a shears comprising a pair of counter-opposed and counter-rotating drums (11) with blades (17, 18) arranged on their circumference in a mating position, said shears comprising at least a switching device (14) located upstream of said drums (11) and suitable to traverse on a substantially horizontal plane to convey lengthwise a rolled stock (13) emerging from a rolling train, said switching device (14) being suitable to cause said rolled stock (13) to transit at least in correspondence with a shearing zone (20) and at least a scrapping zone (21) located at the side of said shearing zone, there being included downstream from said drums (11) first means (30, 31) to receive the bars sheared to size and second means (28) to receive the scrapped leading and trailing ends, said first means (30, 31) cooperating downstream with means to collect the product and said second means (28) cooperating downstream with braking means to brake the scrap segments (213), said blade-bearing drums (11) being maintained in continuous rotation for the whole duration of the shearing cycle, the method being **characterised in that**, for each shearing cycle, the speed of rotation of said blade-bearing drums (11) is calculated in order to be related to the specific speed of feed of said rolled stock (13), to the distance of the blades (17) along the circumference of said drums (11) and to a desired base measurement of said bars, said base measurement being a length which is a sub-multiple of the desired length of each bar which is to be sheared to size from the rolled stock (13), the speed of rotation of the drums (11) being maintained angularly constant and being such as to achieve a plurality of lengths of bar (13), which are multiples of said base measurement, in a finite number of rotation passes of the shearing blades (17) for said specific speed of feed of said rolled stock (13).

2. Method as in Claim 1, **characterised in that**, in order to shear the trailing end of said rolled stock (13), a remaining length of said rolled stock (13) is measured, at a certain point upstream of said shears (10), and the number of base measurements contained in said remaining length is calculated, the length at least of one end section of the sheared to size bar being determined by the actual length contained in the final segment without the trailing end.

3. Method as in Claim 1, **characterised in that** said switching device (14) is made to cooperate sequentially with a zone for scrapping the leading end (21), with a first transit zone (22), with a zone (20) for shearing to size, with a second transit zone (22) opposite the first transit zone (22) and with a zone (21) for scrapping the trailing end, the transit into the shearing to size zone (20) being repeated for the number of sized bars to be obtained from the rolled stock (13).

4. Method as in Claim 3, **characterised in that** said trailing end is scrapped in the same zone where the leading end (21) is scrapped.

5. Method as in Claim 3, **characterised in that** said trailing end is scrapped in a specific zone for scrapping the trailing end (21) situated on the opposite side, with respect to the zone for shearing to size (20), of the zone for scrapping the leading end (21).

6. Method as in Claim 4 or 5, **characterised in that** the position for scrapping the trailing end is a function of the specific transit zone (22), either left or right of the zone for shearing to size (20), of the last bar sheared from the rolled stock (13).

7. Method as in any claim hereinbefore, **characterised in that** between the shearing of the leading and/or the trailing end and the beginning of the shearing to size step there is a procedure to obtain a sample.

8. Method as in any claim hereinbefore, which uses two or more parallel shears (10) serving the same or several rolling lines.

9. Method as in Claim 8, **characterised in that** the shears (10) are driven by a single motor means (34).

10. Method as in Claim 8, **characterised in that** each shears (10) is driven by respective motor means (34).

11. Method as in any Claim from 1 to 7 inclusive, which uses drums (111) equipped with two or more groups of identical blades, each group of blades serving a respective rolling line.

12. Shears for shearing to size rolled bars with blades (17, 18) arranged on the circumference of counter-opposed and counter-rotating drums (11), said shears comprising at least a switching device (14) located upstream of said drums (11), movable sideways on the plane of feed of the rolled stock (13) and conveying lengthwise a rolled stock (13) emerging from a rolling train, said switching device (14) being able to be displaced at least in correspondence with a shearing axis (20a), there being included downstream from said drums (11) first means (30, 31) to receive the bars (113) sheared to size and second means (28) to receive the scrapped leading and trailing ends, said first means (30, 31) cooperating downstream with means to collect the product and said second means (28) cooperating downstream with braking means to brake the scrap segments (213), said blade-bearing drums (11), rotating continuously, including shearing blades (17) at the center to shear to size the bars (113) and laterally, on both sides, blades (25) to shear the leading and trailing ends and to shear samples, and scrapping blades (18), there being included between the shearing blades (17) and the blades for scraping and for shearing the leading and trailing ends for shearing samples (18, 25) respective spaces (19) without blades through which the good part of the rolled stock (13) passes, the shears being **characterised in that**, for each shearing cycle, said drums (11) are able to be rotated at an angularly constant speed, and means (33) are provided to calculate the value of the rotation speed of said drums (11) in such a way that it is related to the speed of feed of the rolled stock (13), to the distance of said shearing blades (17) along the circumference of said drums (11) and to a desired base measurement of shearing of said bars to be obtained from said rolled stock (13), so as to achieve a plurality of lengths of bar, which are multiples of said base measurement, in a finite number of rotation passes of the shearing blades (17) for said specific speed of feed of said rolled stock (13).

13. Shears as in Claim 12, **characterised in that** said shearing blades (17) are conformed to direct the bar sheared to size (113) towards said respective first reception means (30, 31) and said scrapping blades (18) are conformed to direct the scrap segments (213) towards said respective second reception means (28).

14. Shears as in Claim 12, **characterised in that** said blades for shearing the leading and trailing ends for shearing samples (25) are conformed to direct the sheared end upwards or downwards according to whether the leading or trailing end has been sheared.

15. Shears as in Claim 12, **characterised in that** said blades for shearing the leading and trailing ends for shearing samples (25) are conformed to direct the sample segments towards the respective second reception means (28).

16. Shears as in Claim 12 or 13, **characterised in that** said drums (11), at least in correspondence with said shearing blades (17), have an outer cam conformation to guide the sheared to size bars (113) towards said respective first reception means (30, 31).

17. Shears as in any Claim from 12 to 16 inclusive, **characterised in that** said drums (11), on the outer periphery at least in correspondence with said scrapping blades (18), have recesses (29) to guide the scrap segments (213) towards said respective second reception means (28).

18. Shears as in Claim 12 or 13, **characterised in that** said drums (11), at least in correspondence with said blades (25) for shearing the leading and trailing ends and for shearing samples, have an outer cam conformation to guide the sample segments towards said respective second reception means (28).

19. Shears as in any Claim from 12 to 18 inclusive, **characterised in that** downstream of said blade-bearing drums (11) there is a stationary tile (26) defining at least transit seatings (26b, 26c) to guide and convey the sheared to size bars (113) towards said respective reception means (30, 31) and at least transit seatings (26a, 26d) to guide and convey said scrap segments (213) towards the respective second reception means (28).

20. Shears as in any Claim from 12 to 19 inclusive, which includes guide means (23) for said single-channel switching device (14).

21. Shears as in Claim 20, **characterised in that** said guide means (23) define a horizontal shearing plane (24).

22. Shears as in Claim 20, **characterised in that** said guide means (23) define a shearing plane (24) at least partly zigzag or similar.

## Patentansprüche

1. Verfahren zum Zuschneiden von Walzgut, wobei das Verfahren eine Schere verwendet, die aus einem Paar gegenüberliegender und gegenläufig rotierender Trommeln (11) besteht, an deren Umfang in einer zueinander passenden Position Klingen (17, 18) angeordnet sind, die Schere zumindest eine, stromauf der Trommeln (11) gelegene Umlenkeinrichtung (14) besitzt, welche auf einer im wesentlichen horizontalen Ebene schwenken kann, um von einer Walzstraße austretendes Walzgut (13) in Längsrichtung zu fördern, die Umlenkeinrichtung (14) veranlassen kann, dass das Walzgut (13) zumindest einer Schneidezone (20) bzw. zumindest einer Schrottzone (21), welche seitlich der Schneidezone gelegen ist, zugeordnet durchläuft, stromab der Trommel (11) ein erstes Mittel (30, 31) zur Aufnahme des zugeschnittenen Walzgutes und ein zweites Mittel (28) zur Aufnahme der abgeschrotteten Kopf- und Schwanzenden vorgesehen ist, das erste Mittel (30, 31) stromab mit einem Mittel zum Aufnehmen des Produkts zusammenarbeitet und das zweite Mittel stromab mit einem Bremsmittel zum Abbremsen der Schrottabschnitte (213) zusammenwirkt und die Klingen-tragenden Trommeln (11) während der gesamten Dauer des Schneidzyklus in kontinuierlicher Drehung gehalten werden und das Verfahren **dadurch gekennzeichnet ist, dass** für jeden Schneidzyklus die Drehzahl der Klingen-tragenden Trommeln (11) berechnet wird, um mit der spezifischen Zuführgeschwindigkeit des Walzgutes (13), dem Abstand der Klingen (17) längs des Umfangs der Trommeln (11) und mit einer gewünschten Grundabmessung in Beziehung zu stehen, wobei die Grundabmessung eine Länge ist, welche ein Bruchteil der gewünschten Länge jedes Barren ist, der von dem Walzgut (13) zugeschnitten werden soll, und die Winkelgeschwindigkeit der Trommeln (11) konstant und so gehalten wird, dass in einer endlichen Zahl von Rotationsdurchgängen der Schneideklingen (17) bei der spezifischen Zuführgeschwindigkeit des Walzguts (13) eine Mehrzahl von Abschnitten des Walzguts (13) erhalten wird, die ein Vielfaches der Grundabmessung sind.

2. Verfahren nach Anspruch 1, **dadurch gekennzeichnet, dass** zum Abschneiden des Schwanzendes des Walzgutes (13) an einem bestimmten Punkt stromauf der Schere (10) eine Restlänge des Walzgues (13) gemessen wird, und die Anzahl der in dieser Restlänge enthaltenen Grundabmessungen berechnet wird, wobei die Länge zumindest eines Endabschnitts des zugeschnittenen Walzgutes durch die in dem Endabschnitt ohne das Schwanzende enthaltene aktuelle Länge bestimmt wird.

3. Verfahren nach Anspruch 1, **dadurch gekennzeichnet, dass** die Umlenkeinrichtung (14) dazu eingerichtet ist, der Reihe nach mit einer Zone zum Abschrotten des Kopfendes (21), mit einer ersten Übergangszone (22), mit einer Zone (20) zum Zuschneiden, mit einer zweiten Übergangszone (22) gegenüber der ersten Übergangszone (22) und mit einer Zone (21) zum Abschrotten des Schwanzendes zusammenzuarbeiten, wobei der Übergang in die Zuschneidezone (20) für die Anzahl der von dem Walzgut (13) zu erhaltenden zugeschnittenen Barren wiederholt wird.

4. Verfahren nach Anspruch 3, **dadurch gekennzeichnet, dass** das Schwanzende in derselben Zone abgeschrottet wird, in welcher das Kopfende (21) abgeschrottet wird.

5. Verfahren nach Anspruch 3, **dadurch gekennzeichnet, dass** das Schwanzende in einer eigenen Zone (21) zum Abschrotten des Schwanzendes abgeschrottet wird, die - bezogen auf die Zuschneidezone (20) - an der gegenüberliegenden Seite der Verschrottungszone (21) für das Kopfende liegt.

6. Verfahren nach Anspruch 4 oder 5, **dadurch gekennzeichnet, dass** die Lage des Abschrottens des Schwanzendes eine Funktion der besonderen Übergangszone (22) - entweder links oder rechts von der Zuschneidezone (20) - des letzten von dem Walzgut (13) abgeschnittenen Barrens ist.

7. Verfahren nach einem der vorgehenden Ansprüche, **dadurch gekennzeichnet, dass** zwischen dem Abschneiden des Kopf- und/oder Schwanzendes und dem Beginn des Zuschneidens ein Vorgang zur Probengewinnung vorgeschrieben ist.

8. Verfahren nach einem der vorgehenden Ansprüche, welches zwei oder mehr parallele Scheren (10) für dieselbe oder für mehrere Walzstraßen verwendet.

9. Verfahren nach Anspruch 8, **dadurch gekennzeichnet, dass** die Scheren (10) von einem einzigen Motormittel (34) angetrieben sind.

10. Verfahren nach Anspruch 8, **dadurch gekennzeichnet, dass** jede Schere (10) von einem zugehörigen Motormittel (34) angetrieben ist.

11. Verfahren nach einem der Ansprüche 1 bis 7, welches Trommeln (111) verwendet, die mit zwei oder mehr Gruppen identischer Klingen versehen sind, wobei jede Gruppe von Klingen für eine zugehörige Walzstraße dient.

12. Schere zum Zuschneiden von Walzgut, mit an dem Umfang gegenüberliegender und gegensinnig rotierender Trommeln (11) angeordneten Klingen (17, 18), wobei die Schere zumindest eine stromauf der Trommel (11) gelegene Umlenkeinrichtung (14) und bewegbare Seitengänge auf der Zuführebene des Walzguts (13) aufweist, welche ein von einer Walzstraße austretendes Walzgut (13) in Längsrichtung fördern, die Umlenkeinrichtung (14) zumindest entsprechend einer Schneidachse (20a) versetzt werden kann, stromab der Trommeln (11) ein erstes Mittel (30, 31) zur Aufnahme der zugeschnittenen Barren (113) und ein zweites Mittel (28) zur Aufnahme der abgeschrotteten Kopf- und Schwanzenden vorgesehen sind, das erste Mittel (30,31) stromab mit einem Mittel zum Aufnehmen des Produktes zusammenarbeitet und das zweite Mittel (28) stromab mit einem Bremsmittel zum Abbremsen der Schrottabschnitte (213) zusammenarbeitet, die Klingen-tragenden kontinuierlich rotierenden Trommeln (11) in der Mitte Schneideklingen (17) zum Zuschneiden der Barren (113), an beiden Seiten Klingen (25) zum Abschneiden der Kopf- und Schwanzenden sowie von Proben und Abschrottklingen (18) aufweisen, und zwischen den Schneideklingen (17) und den Klingen (18, 25) zum Abschrotten und zum Abschneiden der Kopf- und Schwanzenden für Schneidproben entsprechende Freiräume (19) ohne Klingen vorgesehen sind, durch welche der brauchbare Teil des Walzguts (13) hindurchläuft, wobei die Schere **dadurch gekennzeichnet ist, dass** die Trommeln (11) für jeden Schneidezyklus mit konstanter Winkelgeschwindigkeit rotieren können und ein Mittel (33) vorgesehen ist, um den Drehzahlwert dieser Trommeln (11) so zu berechnen, dass er mit der Zuführgeschwindigkeit des Walzguts (13), dem Abstand der Schneideklingen (17) längs des Umfanges der Trommeln (11) und einer gewünschten Grundabmessung betreffend den Schnitt der von dem Walzgut (13) zu erhaltenden Barren in Beziehung steht, sodass man in einer endlichen Zahl von Rotationsdurchgängen der Schneideklingen (17) bei der spezifischen Zuführgeschwindigkeit des Walzguts (13) eine Mehrzahl von Abschnitten des Walzguts erhält, die ein Vielfaches der Grundabmessung sind.

13. Schere nach Anspruch 12, **dadurch gekennzeichnet, dass** die Schneideklingen (27) so ausgebildet sind, dass sie den zugeschnittenen Barren (113) in Richtung des zugehörigen ersten Aufnahmemittels (30, 31) richten und die Abschrottklingen (18) so ausgebildet sind, dass sie die Schrottabschnitte (213) in Richtung des zugehörigen zweiten Aufnahmemittels (28) lenken.

14. Schere nach Anspruch 12, **dadurch gekennzeichnet, dass** die Klingen (25) zum Abschneiden der Kopf- und Schwanzenden für Schneidproben so ausgebildet sind, dass sie das abgeschnittene Ende nach oben oder nach unten lenken, je nachdem ob das Kopf- oder das Schwanzende abgeschnitten wurde.

15. Schere nach Anspruch 12, **dadurch gekennzeichnet, dass** die Klingen (25) zum Abschneiden der Kopf- und Schwanzenden für Schneidproben so ausgebildet sind, dass sie die Probenabschnitte in Richtung des zugehörigen zweiten Aufnahmemittels (28) lenken.

16. Schere nach Anspruch 12 oder 13, **dadurch gekennzeichnet, dass** die Trommeln (11), zumindest in Abstimmung mit den Schneideklingen (17) eine äußere Nockenausbildung haben, um die zugeschnittenen Barren (113) in Richtung der zugehörigen ersten Aufnahmemittel (30, 31) zu führen.

17. Schere nach einem der Ansprüche 12 bis 16, **dadurch gekennzeichnet, dass** die Trommeln (11) an dem Außenumfang zumindest in Abstimmung mit den Abschrottklingen (18) Vertiefungen (29) aufweisen, um die Schrottabschnitte (213) in Richtung des zugehörigen zweiten Aufnahmemittels (28) zu führen.

18. Schere nach Anspruch 12 oder 13, **dadurch gekennzeichnet, dass** die Trommeln (11) zumindest in Ausrichtung mit den Klingen (25) zum Abschneiden der Kopf- und Schwanzenden und zum Probeschneiden eine äußere Nockenausbildung haben, um die Probenabschnitte in Richtung des zugehörigen zweiten Aufnahmemittels (28) zu führen.

19. Schere nach einem der Ansprüche 12 bis 18, **dadurch gekennzeichnet, dass** stromab der Klingen-tragenden Trommeln (11) eine stationäre Platte (26) vorgesehen ist, welche zumindest Übergangsflührungen (26b, 26c) festlegt, um die zugeschnittenen Barren (113) in Richtung der zugehörigen Aufnahmemittel (30, 31) zu führen und zu fördern, sowie zumindest Übergangsführungen (26a, 26d), um die Schrottabschnitte (213) in Richtung des zugehörigen zweiten Aufnahmemittels (28) zu führen und zu fördern.

20. Schere nach einem der Ansprüche 12 bis 19, welche ein Führungsmittel (23) für die einkanalige Umlenkeinrichtung (14) besitzt.

21. Schere nach Anspruch 20, **dadurch gekennzeichnet, dass** das Führungsmittel (23) eine horizontale Schneidebene (24) festgelegt.

22. Schere nach Anspruch 20, dass das Führungsmittel (23) eine Schneidebene (24) festlegt, die zumindest teilweise zickzackförmig oder ähnlich ist.

## Revendications

1. Procédé pour cisailler à dimensions des produits laminés, le procédé utilise des cisailles comprenant une paire de tambours en opposition et contre-rotatifs (11) équipés des lames (17, 18) disposées sur leurs circonférences en position conjuguée, lesdites cisailles comprennent au moins un dispositif de commutation (14) disposé en amont desdits tambours (11) et approprié pour faire traverser sur un plan essentiellement horizontal et pour transporter longitudinalement un produit de laminage (13) au sortir d'un train de laminoirs, ledit dispositif de commutation (14) est adapté pour permettre au produit de laminage (13) de traverser au moins en correspondance avec la zone de cisaillage (20) et au moins la zone de ferraillage (21), localisées à côté de ladite zone de cisaillage, qui comprend en aval desdits tambours (11) des premiers moyens (30, 31) pour recevoir les barres cisaillées à dimensions et des second moyens (28) pour recevoir les extrémités de ferraillage et de remorquage, lesdits premiers moyens (30, 31) coopèrent en aval avec des moyens pour rassembler le produit et lesdits second moyens (28) coopèrent en aval avec des moyens d'écrasage pour écraser les segments de rebut (213), lesdits tambours porte-lames (11) sont maintenus en rotation continue pendant la durée complète du cycle de cisaillage, le procédé est **caractérisé en ce que**, pour chaque cycle de cisaillage, la vitesse de rotation desdits tambours porte-lames (11) est calculée de manière à faire correspondre la vitesse spécifique d'alimentation dudit produit de laminage (13), la distance entre les lames (17) le long de la circonférence desdits tambours (11) et une dimension de base souhaitée desdites barres, ladite dimension de base a une longueur qui est un sous-multiple de la longueur souhaitée pour chaque barre qui doit être cisaillée à dimensions à partir du produit de laminage (13), la vitesse de rotation des tambours (11) est maintenue angulairement constante et est de telle sorte pour réaliser un pluralité de longueurs de barre (13), qui sont des multiples de la dimension de base, dans un nombre entier de rotations de passage des lames de cisaillage (17) pour ladite vitesse spécifique d'alimentation dudit produit de laminage (13).

2. Procédé selon la revendication 1, **caractérisé en ce que**, afin de cisailler l'extrémité de remorquage dudit produit de laminage (13), une longueur restante dudit produit de laminage (13) est mesurée, à un certain niveau en amont desdites cisailles (10), et le nombre de mesures de basses contenues dans ladite longueur restante est calculé, la longueur au moins d'une section d'extrémité de la barre cisaillée à dimensions est déterminée par la longueur réelle contenue dans le segment final sans l'extrémité de remorquage.

3. Procédé selon revendication 1, **caractérisé en ce que** ledit dispositif de commutation (14) est fait pour coopérer séquentiellement avec une zone pour ferrailler l'extrémité de guidage (21), avec une première zone de passage (22), avec une zone pour cisailler à dimensions (20), avec une deuxième zone de passage (22) en face de la première zone de passage (22) et avec une zone pour ferrailler l'extrémité de remorquage (21), le passage dans la zone pour cisailler à dimensions (20) est répété en fonction du nombre à obtenir de barres dimensionnées à partir du produit de laminage (13).

4. Procédé selon la revendication 3, **caractérisé en ce que** ladite extrémité de remorquage est ferraillée dans la même zone où l'extrémité de guidage (21) est ferraillée.

5. Procédé selon la revendication 3, **caractérisé en ce que** ladite extrémité de remorquage est ferraillée dans une zone particulière pour ferrailler l'extrémité de remorquage (21) située du côté opposé, en ce qui concerne la zone pour cisailler à dimensions (20), à la zone pour ferrailler l'extrémité de guidage (21).

6. Procédé selon les revendications 4 ou 5, **caractérisé en ce que** la position pour ferrailler l'extrémité de remorquage est fonction de la zone particulière de passage (22), à droite ou à gauche de la zone pour cisailler à dimensions (20), de la dernière barre cisaillée du produit de laminage (13).

7. Procédé selon l'une quelconque des revendications précédentes, **caractérisé en ce que** entre le cisaillement de l'extrémité de guidage et/ou de remorquage et le commencement de l'étape de cisaillement à dimensions il y a une procédure pour obtenir un échantillon.

8. Procédé selon l'une quelconque des revendications précédentes, qui utilise deux ou davantage de cisailles parallèles (10) servant à la même ou plusieurs des lignes de laminage.

9. Procédé selon la revendication 8, **caractérisé en ce que** les cisailles (10) sont entraînées par les mêmes moyens de motorisation (34).

10. Procédé selon la revendication 8, **caractérisé en ce que** chacune des cisailles (10) est entraînée par les moyens respectifs de motorisation (34).

11. Procédé l'une quelconque des revendications 1 à 7, qui utilisent les tambours (111) équipés de deux ou davantage groupes de lames identiques, chaque groupe de lames servant une ligne respective de laminage.

12. Cisailles pour cisailler des produits de laminage à dimensions avec des lames (17, 18) disposées sur la circonférence de tambours en opposition et contre-rotatifs (11), lesdites cisailles comprennent au moins un dispositif de commutation (14) localisé en amont desdits tambours (11), mobile latéralement dans le plan d'alimentation du produit de laminage (13), et transportent en longueur un produit de laminage (13) au sortir d'un train de laminoirs, ledit dispositif de commutation (14) est capable d'être déplacé au moins en correspondance avec un axe de cisaillage (20a), sont inclus ici en aval desdits tambours (11) des premiers moyens (30, 31) pour recevoir les barres à cisailler à dimensions (113) et des second moyens (28) pour recevoir les extrémités de guidage et de remorquage ferraillées, lesdits premiers moyens (30, 31) coopérant en aval avec des moyens de collecte de produit et lesdits seconds moyens (28) coopérant en aval avec des moyens d'écrasage pour écraser les segments de rebut (213), lesdits tambours parte-lames (11), tournant sans interruption, y compris les lames de cisaillement (17) au centre pour cisailler à dimensions les barres (113) et latéralement, sur les deux côtés, les lames (25) pour cisailler les extrémités de guidage et de remorquage et pour cisailler des échantillons, et les lames de ferraillage (18), là étant inclus entre les lames de cisaillement (17) et les lames pour ferrailler et pour cisailler les extrémités de guidage et de remorquage pour les espaces sans lames respectifs (19) des témoins cisaillés (18, 25) à travers lesquels le bon tronçon du produit de laminage (13) passe, les cisailles sont **caractérisées en ce que**, pour chaque cycle de cisaillage, lesdits tambours (11) sont capables de tourner à une vitesse angulaire constante, et des moyens (33) sont fournis pour calculer la valeur de la vitesse de rotation desdits tambours (11) de telle manière qu'elle soit en relation avec la vitesse d'alimentation du produit de laminage (13), de la distance desdites lames de cisaillage (17) le long de la circonférence desdits tambours (11) et de la dimension de base souhaitée pour cisailler ladite barre dudit produit de laminage (13), afin de réaliser une pluralité de longueurs de bane, qui sont des multiples de ladite dimension de base, dans un nombre entier de rotations de passage des lames de cisaillage (17) pour ladite vitesse particulière d'alimentation dudit produit de laminage (13).

13. Cisailles selon la revendication 12, **caractérisées en ce que** les lames de cisaillage (17) sont conformées pour diriger la barre cisaillée à dimensions (113) vers lesdits premiers moyens respectifs de réception (30, 31) et lesdites lames de ferraillage (18) sont conformées pour diriger les segments de rebut (213) vers lesdits deuxièmes moyens respectifs de réception (28).

14. Cisailles selon la revendication 12, **caractérisées en ce que** les lames pour cisailler les extrémités de guidage et de remorquage pour les échantillons de cisaillage (25) sont conformées pour diriger l'extrémité cisaillée vers le haut ou vers le bas selon que l'extrémité de guidage ou de remorquage a été cisaillée.

15. Cisailles selon la revendication 12, **caractérisées en ce que** les lames pour cisailler les extrémités de guidage et de remorquage pour les échantillons de cisaillage (25) sont conformées pour diriger les segments d'échantillon vers les deuxièmes moyens respectifs de réception (28).

16. Cisailles selon les revendications 12 ou 13, **caractérisées en ce que** les tambours (11), au moins en relation avec lesdites lames de cisaillage (17), ont une conformation externe en saillie pour guider les barres cisaillées à dimensions (113) vers lesdits premiers moyens respectifs de réception (30, 31).

17. Cisailles l'une quelconque des revendications 12 à 16, **caractérisées en ce que** les tambours (11), sur la périphérie externe au moins en relation avec lesdites lames ferraillantes (18), ont des encoches (29) pour guider les segments de rebut (213) vers lesdits deuxièmes moyens respectifs de réception (28).

18. Cisailles selon l'une des revendications 12 ou 13, **caractérisées en ce que** lesdits tambours (11), au moins en relation avec lesdites lames (25) pour cisailler les extrémités de guidage et de remorquage et pour les échantillons de cisaillement, ont une conformation externe en saillie pour guider les segments d'échantillon vers lesdits deuxièmes moyens respectifs de réception (28).

19. Cisailles selon l'une quelconque des revendications 12 à 18, **caractérisées en ce qu'**en aval desdits tambours porte-lames (11) il y a une dalle stationnaire (26) définissant au moins les logements de passage (26b, 26c) pour guider et transporter les barres cisaillées à dimensions (113) vers lesdits moyens respectifs de réception (30, 31) et au moins les logements de passage (26b, 26c) pour guider et pour convoyer lesdits segments de rebut (213) vers les deuxièmes moyens respectifs de réception (28).

20. Cisailles selon l'une quelconque des revendications 12 à 19, qui inclut des moyens de guidage (23) pour ledit dispositif de commutation à canal unique (14).

21. Cisailles selon la revendication 20, caractisdes en ce que dans lesdits moyens de guidage (23) est défini un plan de cisaillage horizontal (24).

22. Cisailles selon la revendication 20, **caractérisées en ce que** dans lesdits moyens de guidage (23) est défini un plan de cisaillage (24) au moins partiellement en zigzag ou similaire.
